# EUROPEAN PATENT APPLICATION

(11) **EP 2 108 817 A2**
(43) Date of publication of application: **14.10.2009**
(21) Application number: 09154478.3
(22) Date of filing: 06.03.2009
(51) Int. Cl.: F03D 1/00, F03D 11/00, F03D 11/04

(54) **Concrete to fabricate the nacelle of a wind turbine**

(30) Priority: 11.03.2008 US 45920
(71) Applicant: General Electric Company, Schenectady, NY 12345 (US)
(72) Inventor: Schiffer, Joris, 48341 Rheine (DE); Becker, Christian Alexander, 52078 Aachen (DE)
(74) Representative: Bedford, Grant Richard

(57) **Abstract**

A structure of a wind turbine selected 100 from the group consisting of: a nacelle 22 of a wind turbine, a hub 26 of a wind turbine, and fairings of a wind turbine is described. The structure includes a structure housing 120 comprising a concrete material.

## Description

The present invention relates generally to wind turbines. Particularly, it relates to a nacelle of a wind turbine or other structures provided on top of the tower of a wind turbine and methods of manufacturing nacelle and/or other structures of a wind turbine.

The increasing demand for power generation with wind turbines result in a desire for reducing costs and improving characteristics of components of a wind turbine.

For example, noise generated by a wind turbine can be partly mechanical. Mechanical noise is generated mainly from rotating machinery in the nacelle, particularly the gear box and the generator. However, there may also be contributions from cooling fans, auxiliary equipment (such as pumps and compressors), bearings and the yaw system. Mechanical noise is often at a plurality of frequencies or a tone which maybe caused by the meshing frequency of a stage of the gear box. Noise emission of the wind turbine should be minimized to an admissible sound pressure level depending on the allowed noise source in a certain location.

Further, the use of low-cost materials for a component of a wind turbine is desired. Thereby, the production costs of manufacturing a component with a certain material has to be considered.

In view of the above, according to various aspects of the present invention, there are provided, a structure of a wind turbine, a wind turbine, and a method of manufacturing a structure of a wind turbine.

According to one embodiment, a structure of a wind turbine selected from the group consisting of: a nacelle of a wind turbine, a hub of a wind turbine, and fairings of a wind turbine is provided. The structure includes a structure housing comprising a concrete material.

According to another embodiment, a wind turbine having a nacelle or another structure selected from the group consisting of a hub and fairings is provided. The wind turbine includes a structure wall comprising a concrete material.

According to an even further embodiment, a method of manufacturing a structure of a wind turbine is provided. The method includes providing reinforced concrete in a structure wall shape; and hardening the concrete.

Various embodiments, aspects, advantages and features are apparent from the appended claims, the description and the accompanying drawings, in which:
Fig. 1 shows a schematic view of a portion of a wind turbine having a nacelle with a housing comprising concrete material;
Fig. 2 shows an enlarged view of the nacelle including the housing of the nacelle according to embodiments described herein;
Fig. 3 shows an enlarged view of a further nacelle including the housing of the nacelle according to embodiments described herein; and
Fig. 4 shows a schematic view of a portion of a further wind turbine having a nacelle with a housing comprising concrete material;
Reference will now be made in detail to the various embodiments, one or more examples of which are illustrated in the figures. Each example is provided by way of explanation of the invention and is not meant as a limitation of the invention. For example, features illustrated or described as part of one embodiment can be used on or in conjunction with other embodiments to yield yet a further embodiment. It is intended that the scope of the present invention includes such modifications and variations.

Modern wind turbines experience and increase in size and rated power. In particular, megawatt and multi-megawatt wind turbines are more commonly installed. Thereby, the increase in size and rated power of the wind turbines also result in an increasing amount of materials required. Accordingly, substituting expensive materials with low-cost materials gets increasingly important.

According to embodiments described herein, concrete and, in particular reinforced concrete, is used to manufacture the nacelle of wind turbine generator systems.

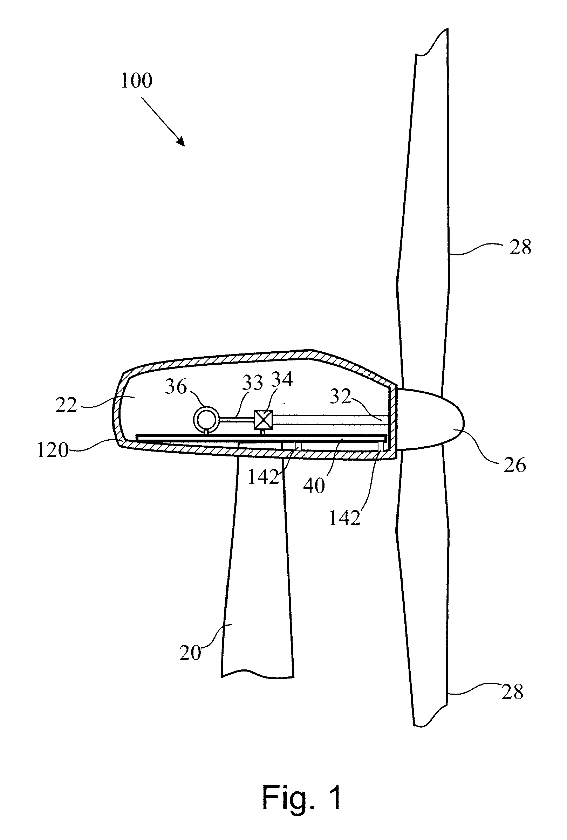

Fig. 1 illustrates embodiments of wind turbine 100. Fig. 1 shows a portion of a wind turbine, wherein an upper part of the tower 20 is shown. The nacelle 22 is mounted on the tower 20. The nacelle 22 carries the hub 26 to which the rotor blades 28 are mounted. The rotation of the rotor is transferred to the gear box 34 by the drive train 32. The gear box 34 is connected to the generator 36 by a shaft 33. These and other components like the yaw drive, a breaking system, a cooling system and electronic devices are provided in the nacelle 22 of the wind turbine 100.

The nacelle 22 has a housing portion 120 or a wall, which comprises a concrete material. Thereby, typically reinforced concrete can be used.

According to different embodiments, which can be combined with other embodiments described herein, the concrete nacelle can be reinforced by materials and/or woven materials of the group consisting of, for example, steel, plastic, cotton, glass, mono filament polypropylene, span basalt, synthetic materials, natural materials and combinations thereof.

According to yet other embodiments, alternatively or additionally steel cages, steel reinforcement bars (re-bar) or other cages and/or bars can be used for reinforcement. Thereby, it is possible to increase the amount of tension force that can be taken by the concrete.

According to embodiments described herein, concrete as a low-cost material that can easily be brought into nearly any shape can be used for manufacturing the nacelle. Thereby concrete also provides a material which can significantly reduce acoustic emission from the machine head compared to other materials. Additionally, concrete is less inflammable than fiber composite structures like fiber reinforced plastic.

Generally, according to embodiments described herein, which can be combined with other embodiments described herein, every type of concrete, which may typically be reinforced can be used for manufacturing the housing of a structure from the group consisting of: a nacelle of a wind turbine, a hub of a wind turbine, and fairings of a wind turbine. Thereby, as typical examples, lightweight concrete, air-entrained concrete and/or other types of concrete described herein.

According to embodiments described herein, concrete as a mixture of cement and water, wherein cementitious materials such us fly ash, slag cement and aggregates can be included is used as a material for the nacelle, in particular the wall of the nacelle housing. Concrete solidifies and hardens after mixing due to hydration. Before hydration, concrete can be brought into any shape and, thus, a nacelle can be easily manufactured.

According to specific embodiments, refractory cement might be used for providing better ability to withstand elevated temperatures.

According to yet further embodiments, which can be combined with other embodiments described herein, sand, natural gravel, crushed stones, air-cooled blast furnace slag, ash, remainders from recycling can be used as aggregates in the cement. Further optionally, chemical admixtures like accelerators, air-entrainers, plasticizers and corrosion inhibitors can be added. Additionally or optionally also mineral admixtures like fly ash, slag, silica fume can be adhered for providing the desired material characteristic of the concrete use to manufacture the nacelle. As a further alternative cork-cement may be also be used.

According to yet further embodiments, in particular, for off-shore applications wherein seawater might have corrosive effects on concrete, porcelain cement and cement using more than 50 % or 60 % of slag as an aggregate can be used to improve the resistance to seawater.

Further, according to some implementations, high-strength concrete can be used by lowering the water-cement ratio and, optionally at silica fume. Generally, other forms of high-performance concrete (HPC) can be used to improve the characteristics of concrete, for example with regard to long-term mechanically properties, long life in severe environments, permeability, volumes debility, and the like.

According to yet further embodiments, shotcrete can be used to shoot concrete on to a frame or structure, which might for example be provided by woven material. Thereby a concrete nacelle can be easily manufactured.

As shown in Fig. 1, the nacelle 22 and the base plate 40 which may according to different embodiments be a single base frame (or bedplate), or which may also have different individual or connected frames like a main frame and a generator frame, are connected to each other by connecting members 142.

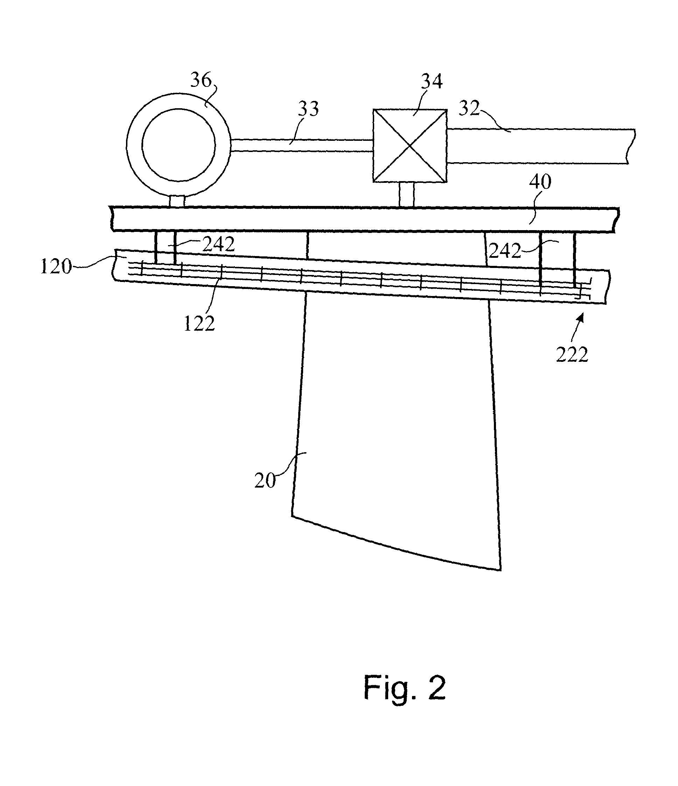

Other embodiments and details of a concrete material included in a nacelle are shown in Fig. 2. Fig. 2 shows an enlarged view of a nacelle having a housing portion 120. Within the nacelle the base frame 40 is included carrying the gear box 34 and the generator 36. As described above, the gear box is connected to the rotor by a drive train 32 and the generator is connected to the gear box by shaft 33. Within the housing 120 of the nacelle, which includes concrete material, reinforcement bars 122 are provided. Typically, the reinforcement bars can be made of steel, a plastic material and/or a natural material. Additionally or alternatively the reinforcement can be provided by a cage. According to further alternatives or additional options hooks, and connections between reinforcing bars can be provided as shown in the area 222.

According to some embodiments, which can be combined with other embodiments described herein, the connection between the base frame 40 and the nacelle housing 120 can be provided by connecting members 242 which connect a reinforcement portion of the concrete material with the base frame.

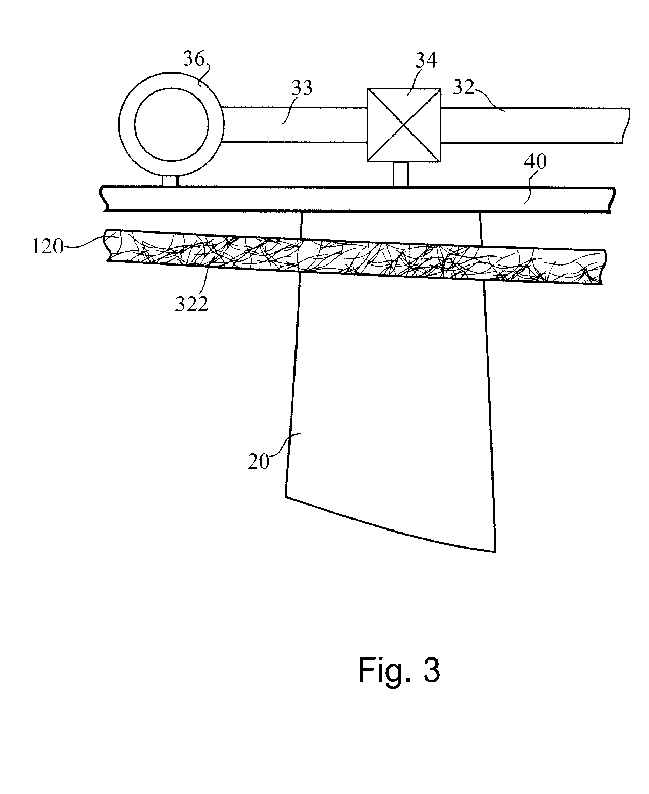

Other embodiments of concrete materials that can be used for manufacturing the nacelle housing 120 are illustrated with regard to Fig. 3. The concrete material of the nacelle housing 120 includes fibers 322 which can be of a steel material, plastic material and/or glass material. Typically the fibers are homogenously but arbitrarily distributed within the concrete material. According to yet further embodiments, a fiber reinforcement can be combined with a re-bar reinforcement that has been described with respect to Fig. 2.

Generally, concrete has a relatively high compressive strength but lower tensile strength. Thus, as described above, reinforced concrete can be used. Thereby, for example, steel or fiber reinforcement in the form of bars (re-bar), meshes or fibers can be utilized. According to different embodiments, fibers can be made of steel, glass, synthetic or natural materials. Typical steel reinforced (ferroconcrete) structures may include anchorage like anchor plates or bending of the re-bar, for example into 90 degree bend or 100 degree hook. As a further example, fiber-reinforced plastic re-bar reinforcement can alternatively or additionally used.

According to different embodiments, the fiber reinforced concrete can have fiber length of 30 to 80 mm, for example 45 mm, wherein the fiber diameter can be about 1 mm. Typical embodiments have a volume fraction of fibers in the concrete from 0.1 to 3 %.

According to yet further embodiments, it is possible to manufacture the concrete nacelle by providing a mesh of glass fibers, plastic fibers or steel fibers and shoot the concrete on the mesh on order to provide a shotcrete nacelle housing.

According to yet further embodiments, which can be combined with other embodiments described herein, the reinforced concrete structures can be pre-stressed in order to better withstand tensile forces. Generally concrete can withstand compressive forces. By pre-stressing the concrete such that a compressive force acts on the concrete without any outside forces, the ability to withstand tensile stress can be improved. By introducing compressive stress in the concrete material prior to super imposed loads being generated in operation the stress limits in the concrete for both compression attentions can be optimized. Thereby, according to specific examples, the pre-stressing can be achieved by using steel tendons or bars that are subjected to a tensile force prior to casting the concrete, in pre-tension concrete, or after concrete has cured, in posed-tension concrete.

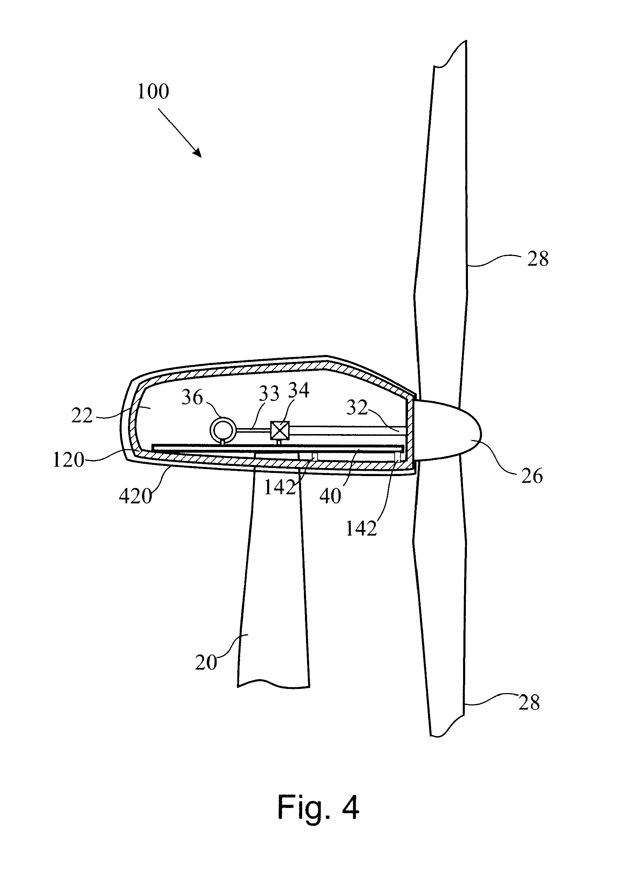

Fig. 4 illustrates embodiments, which are similar to the embodiments described with respect to Fig. 1 and which can be combined with embodiments described with respect to Fig. 2 and 3. Additionally to the nacelle housing 120 being manufactured with concrete materials, a coating 420 can be provided on the outside of the concrete nacelle. Thereby, protection of the concrete nacelle can be achieved. Typically, the coating system can be of a highly flexible material like liquid synthetic materials, composites or plastics, which are provided on web and/or fabric.

Generally, the thickness of the housing of the wall of the nacelle including concrete material can be in arrange of 1 cm to 10 cm, for example 2 cm. By providing modem reinforcement materials, which also allow for a reduced thickness of the wall of the nacelle, the weight increase that might occur in light of the concrete material is limited.

According to yet further embodiments, which can be combined with other embodiments described herein, a method of manufacturing a structure of a wind turbine including providing reinforced concrete in a structure wall shape; and hardening the concrete, may include at least one option from the group of providing the reinforced concrete in conducted by pouring the concrete in a mold including reinforcement therein or shooting the concrete at a structure, frame or web.

This written description uses examples to disclose the invention, including the preferred mode, and also to enable any person skilled in the art to make and use the invention. While the invention has been described in terms of various specific embodiments, those skilled in the art will recognize that the invention can be practiced with modifications within the spirit and scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

According to yet other embodiments, which can be combined with other embodiments described herein, the manufacturing comprising a concrete material can be similarly applied to the spinner/hub of a wind turbine or other kinds of fairings that are applied to the wind turbine.

Various aspects and embodiments of the present invention are defined by the following numbered clauses:
1. A structure of a wind turbine selected from the group consisting of: a nacelle of a wind turbine, a hub of a wind turbine, and fairings of a wind turbine, comprising:
   a structure housing comprising a concrete material.
2. The structure of clause 1, wherein the structure is a nacelle of the wind turbine.
3. The structure of any preceding clause, wherein the concrete material is reinforced concrete having a reinforcement embedded in the concrete material.
4. The structure of any preceding clause, wherein the reinforcement comprises reinforcement bars.
5. The structure of any preceding clause, wherein the reinforcement bars consist of a material selected at least from the group consisting of steel, plastics, carbon and combinations thereof.
6. The structure of any preceding clause, wherein the reinforcement comprises a cage and/or an anchorage.
7. The structure of any preceding clause, wherein the reinforcement comprises fibers comprising at least a material selected from the group consisting of glass fibers, steel fibers, plastic fibers, synthetic fibers, natural fibers, and combinations thereof.
8. The structure of any preceding clause, wherein the concrete material is prestressed.
9. The structure of any preceding clause, further comprising a coating provided at the outside of the concrete material.
10. A wind turbine having a structure selected from the group consisting of a nacelle, a hub, and fairings, the wind turbine comprising:
   a structure wall comprising a concrete material.
11. The wind turbine of clause 10, wherein the structure is the nacelle.
12. The wind turbine of clause 10 or 11, wherein the concrete material is reinforced concrete having a reinforcement embedded in the concrete material.
13. The wind turbine of any of clauses 10 to 12, wherein the reinforcement comprises reinforcement bars.
14. The wind turbine of any of clauses 10 to 13, wherein the reinforcement bars consist of a material selected at least from the group consisting of steel, plastics, carbon, and combinations thereof.
15. The wind turbine of any of clauses 10 to 14, wherein the concrete can be selected from a group consisting of lightweight concrete and air-entrained concrete.
16. The wind turbine of any of clauses 10 to 15, wherein the reinforcement comprises fibers comprising at least a material selected from the group consisting of glass fibers, steel fibers, plastic fibers, synthetic fibers, natural fibers, and combinations thereof.
17. The wind turbine of any of clauses 10 to 16 wherein the concrete material is prestressed.
18. The wind turbine of any of clauses 10 to 17 further comprising a coating provided at the outside of the concrete material.
19. A method of manufacturing a structure of a wind turbine, the method comprising:
   providing reinforced concrete in a structure wall shape; and
   hardening the concrete.
20. The method of clause 19, wherein the providing the reinforced concrete in conducted by pouring the concrete in a mold including reinforcement therein or by shooting the concrete at a structure, frame or web.

## Claims

1. A structure of a wind turbine (100) selected from the group consisting of: a nacelle (22) of a wind turbine, a hub (26) of a wind turbine, and fairings of a wind turbine, comprising:
a structure housing (120) comprising a concrete material.

2. The structure of claim 1, wherein the concrete material is reinforced concrete having a reinforcement (122, 322) embedded in the concrete material.

3. The structure of claim 2, wherein the reinforcement (122,322) comprises reinforcement bars (122).

4. The structure of claim 3, wherein the reinforcement bars (122) consist of a material selected at least from the group consisting of steel, plastics, carbon and combinations thereof.

5. The structure of any of claims 2 to 4, wherein the reinforcement (122,322) comprises a cage and/or an anchorage.

6. The structure of any of claims 2 to 5, wherein the reinforcement (122,322) comprises fibers (322) comprising at least a material selected from the group consisting of glass fibers, steel fibers, plastic fibers, synthetic fibers, natural fibers, and combinations thereof.

7. The structure of any of claims 1 to 6, wherein the concrete can be at least one element selected from a group consisting of lightweight concrete, air-entrained concrete, pre-stressed, concrete, and combinations thereof.

8. The structure of any of claims 1 to 7, further comprising a coating (420) provided at the outside of the concrete material.

9. A wind turbine (100) having a structure according to any of claims 1 to 9.

10. A method of manufacturing a structure of a wind turbine (100), the method comprising:
providing reinforced concrete in a structure wall shape (120); and
hardening the concrete.
